# DEMANDE DE BREVET EUROPEEN

(11) **EP 1 361 348 A1**
(43) Date de publication de la demande: **12.11.2003**
(21) Numéro de dépôt: 02010583.9
(22) Date de dépôt: 10.05.2002
(51) Int. Cl.: F01P 3/22, F01P 9/06, F25B 27/02, F25B 15/00, B60H 1/32, F02G 5/02

(54) **Dispositif de refroidissement et de dépollution d'un véhicule à moteur**

(71) Demandeur: S.F.T. SERVICES SA, 1950 Sion (CH)
(72) Inventeur: La désignation de l'inventeur n'a pas encore été déposée
(74) Mandataire: Cronin, Brian Harold John

(57) **Abrégé**

Dispositif de refroidissement et de dépollution d'un véhicule à moteur destiné au conditionnement de l'habitacle dudit véhicule ainsi qu'au refroidissement de son bloc moteur (22). Les éléments du dispositif sont reliés par un tube principal (25) contenant un liquide hors-gel. Le dispositif comprend également une vanne de régulation température-pression (17), pour maintenir une pression constante dans le bloc moteur (22) et située en aval du bloc moteur (22), un échangeur eau-air ventilé (6) permettant la climatisation d'un habitacle de véhicule à moteur, un échangeur eau-air ventilé (1) permettant le refroidissement d'un compartiment moteur de véhicule à moteur, au moins une réserve d'eau froide (3) permettant de refroidir dès le démarrage du véhicule à moteur et située entre l'échangeur eau-air ventilé (6) et l'évaporateur (24) et une électrovanne (9) pour réguler la température à l'intérieur de l'habitacle du véhicule à moteur et située en aval de l'échangeur eau-air ventilé (6). Un échangeur eau-fumées (21), situé en aval d'un échangeur eau-fumées (20), sert à dépolluer les gaz d'échappement d'un moteur (18) en refroidissant lesdits gaz d'échappement et en condensant ses résidus d'hydrocarbure ainsi qu'en piégeant les particules desdits gaz d'échappement.

## Description

La présente invention est relative au domaine des véhicules à moteur, plus particulièrement aux dispositifs permettant le refroidissement, la climatisation et la dépollution au sein d'un véhicule à moteur.

Un système qui refroidit ne produit pas de froid, il soustrait de la chaleur. Schématiquement ledit système fonctionne généralement de la façon suivante :

Dans un circuit fermé un fluide frigorigène (liquide/gaz) passe à travers quatre organes, un compresseur, un condenseur, une vanne d'expansion (ou restricteur) et un évaporateur. Le compresseur aspire le gaz vaporisé et le compresse augmentant ainsi sa pression et par conséquent sa température. Le gaz vapeur à haute température et pression se dirige vers le condenseur (qui en réalité est un échangeur) dans lequel grâce à un échange gaz/air ou gaz/eau ou gaz/huile cède sa chaleur et devient un liquide qui a abaissé sa température mais qui a conservé sa pression.

Le fluide poursuit son chemin vers une vanne d'expansion (ou restricteur) à travers laquelle il se vaporise et se détend. Il perd ainsi sa pression et abaisse sa température de manière significative. Le liquide vaporisé se dirige alors vers l'évaporateur (qui lui aussi est un échangeur) et dans lequel il soustrait la chaleur à l'élément que nous voulons « refroidir ». Le liquide vaporisé chargé de la chaleur qu'il a soustrait se dirige vers le compresseur, et le cycle recommence jusqu'à ce qu'un thermostat détermine l'arrêt du compresseur. Il est à noter que les fluides frigorigènes les plus utilisés sont du type CFC comme le R22 et du type HFC comme le R134A.

Dans un véhicule le système susmentionné est installé de la manière suivante :

Le compresseur est installé avec un système d'embrayage sur l'axe du vilebrequin du moteur. L'embrayage est actionné par un thermostat selon les nécessités de climatisation. Le condenseur est installé à l'avant du véhicule dans le compartiment moteur, devant le radiateur de la voiture, et il est refroidi par le ventilateur du radiateur. L'évaporateur est installé dans l'habitacle entre le conducteur et le passager avant. Un système de ventilation fait circuler l'air sur l'évaporateur, et est ainsi recyclé abandonnant chaleur, odeur et humidité.

Le système décrit est un dérivé du cycle de Carnot repris et amélioré et, lors de son fonctionnement, provoque jusqu'à 17% de consommation supplémentaire de carburant.

Le principe susmentionné est celui de la réfrigération, appliqué également lorsque l'on parle d'air conditionné.

L'air conditionné équipe, à l'heure actuelle, la grande majorité des véhicules à moteur. Il est un instrument de confort et de sécurité et se commande de façon manuelle ou automatique afin de refroidir l'habitacle d'un véhicule.

Refroidir n'est pas la seule fonction de l'air conditionné. Il sert aussi à abaisser le taux d'humidité, à éliminer la fumée ainsi que la poussière et les odeurs. Il assure une meilleure visibilité en chassant rapidement la buée sur les vitres et il maintient le conducteur dans une atmosphère constante et agréable qui limite le stress au volant. C'est donc un véritable outil de sécurité routière dont le principe de fonctionnement repose, comme vu précédemment, sur la circulation d'un fluide frigorigène soumis à un cycle compression-expansion.

De tels dispositifs mais à absorption sont décrits dans l'état de la technique, en particulier dans le document US 5'383'341. Ce document décrit un système de réfrigération dont l'énergie est fournie par les gaz d'échappement. Ce système ne concerne que l'utilisation de l'énergie générée par les gaz d'échappements, énergie thermique qui est utilisée pour la production du froid laquelle est utilisée pour climatiser l'habitacle. Il est à relever que la publication WO 01/18366 présente avantageusement un dispositif de dépollution des gaz de combustion et de production d'énergie frigorifique par récupération de l'énergie thermique desdits gaz alors que la publication WO 01/18463 présente avantageusement un dispositif de refroidissement par absorption permettant la génération du froid dès la mise en fonction du système de refroidissement.

Les dispositifs conventionnels refroidissent le moteur à l'aide d'un ventilateur sur le radiateur tel que décrit plus haut. Ces dispositifs offrent les inconvénients d'augmenter la consommation en carburant du véhicule et de faire travailler le moteur à des températures élevées et peu stables, obligeant les fabricants de véhicules à moteur à utiliser des composants électroniques onéreux dans le compartiment moteur puisque ces derniers répondent à des normes contraignantes.

Le but de la présente invention est de proposer un système simple et économique pour permettre de refroidir et de stabiliser la température du compartiment moteur d'un véhicule à moteur, de climatiser l'habitacle et de dépolluer de manière efficace les gaz d'échappement.

Ce but est atteint par un dispositif de refroidissement et de dépollution d'un véhicule à moteur destiné au conditionnement de l'habitacle dudit véhicule ainsi qu'au refroidissement de son bloc moteur et dont les éléments sont reliés par un tube principal contenant un fluide hors-gel comme par exemple l'eau-glicol, comprenant une pompe, un absorbeur, un générateur à haute pression, un générateur à basse pression, un condenseur, un évaporateur caractérisé en ce qu'il comprend une vanne de régulation température-pression, située en aval du bloc moteur, permettant de maintenir une pression constante dans la partie du circuit de refroidissement entourant un moteur à l'intérieur dudit bloc moteur, évitant ainsi l'évaporation de l'eau à l'intérieur dudit moteur et permettant de maintenir le refroidissement constant du bloc moteur et ainsi du compartiment moteur du véhicule à moteur.

Selon l'invention, le dispositif refroidit le compartiment moteur et climatise l'habitacle tout en dépolluant les gaz d'échappement, ceci grâce à l'apport calorifique du bloc moteur et avantageusement aussi des fumées d'échappement du moteur, sans consommation supplémentaire de carburant.

Les avantages de la climatisation de l'habitacle d'un véhicule à moteur sont décrits plus haut. Le refroidissement du compartiment moteur offre également de multiples avantages dont celui d'augmenter la durée de vie de l'ensemble des pièces mécaniques et électroniques situées dans ledit compartiment.

Toutefois un avantage majeur de la présente invention, au vu de l'augmentation des composants électroniques installés dans le compartiment moteur, est de pouvoir utiliser des composants électroniques à des normes moins contraignantes, ce qui entraîne une réduction des coûts.

En effet, la température dans le compartiment moteur étant stabilisée par un dispositif de réfrigération utilisant l'apport énergétique du moteur lui-même, donc moins de chaleur dispersée sous le capot du véhicule, les composants électroniques ne sont plus soumis à des contraintes en températures élevées. Il est à noter, tel que déjà mentionné, que ce système utilise avantageusement les gaz d'échappement pour chauffer le fluide frigorigène.

Une vanne de contrôle température-pression permet de maintenir une pression d'environ 1,5 bar à l'intérieur du bloc moteur évitant ainsi l'évaporation de l'eau à l'intérieur du moteur. Avec ce système le refroidissement du moteur est plus précis et stable que le traditionnel radiateur-ventilateur. Il est à relever que la pression dans le reste du système varie typiquement d'environ 8 mbar dans l'évaporateur à environ 175 mbar dans le générateur à haute température, la température variant quant à elle d'environ 5/7° C dans l'évaporateur à environ 130/135° C dans le générateur à haute température.

Le fluide frigorigène (avantageusement dans ce cas le bromure de lithium-eau dans lequel l'eau n'est pas un absorbant mais un réfrigérant qui permet de refroidir le compartiment moteur et de climatiser l'habitacle et le bromure de lithium est un sel qui ne présente aucun danger lors de sa manipulation ce qui n'est pas le cas de l'ammoniac) travaille notamment à une pression en dessous de la pression atmosphérique ce qui restreint les problèmes de fuites plutôt désignées dans ce cas comme des infiltrations.

L'invention sera mieux comprise grâce à la description détaillée qui va suivre en se référant aux dessins schématiques annexés dans lesquels :
- La figure 1 représente, à titre d'exemple, un dispositif de dépollution et de climatisation de l'habitacle et du compartiment moteur d'un véhicule à moteur, utilisant les gaz d'échappement et la chaleur du moteur pour réchauffer un fluide frigorigène.
- La figure 2 représente, à titre d'exemple, une vanne de contrôle pression-température du dispositif de la figure 1 dans sa position complètement fermée.
- La figure 3 représente cette vanne de contrôle pression-température alors quelle commence à s'ouvrir.

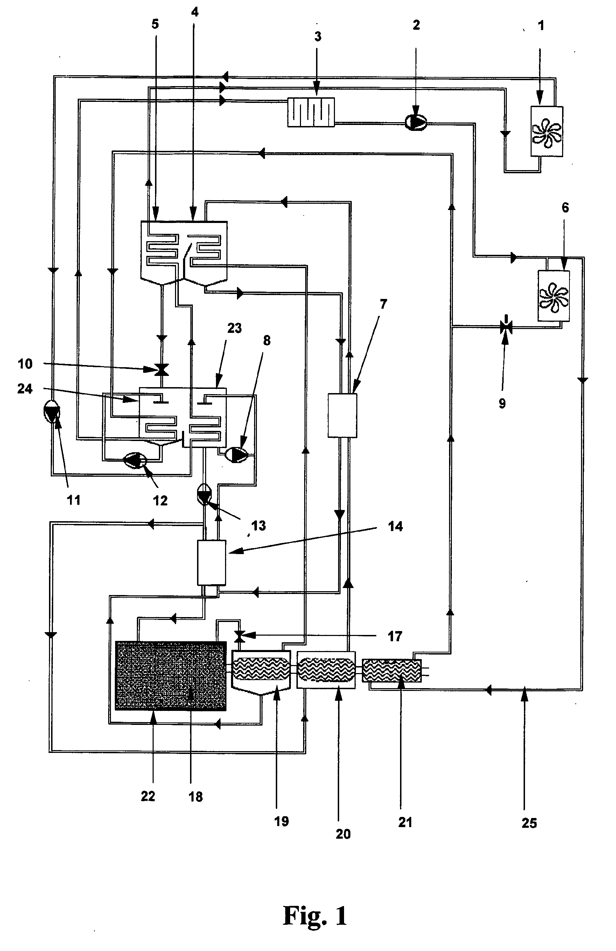

Selon l'invention et suivant la Figure 1, on relie les éléments d'un circuit de refroidissement/climatisation de l'habitacle et du compartiment moteur d'un véhicule à moteur par un tube principal (25) contenant un fluide hors-gel, pour la distribution du froid. Il est à noter que pour la production du froid on utilise une solution comme par exemple le bromure de lithium-eau. Sur ledit circuit, une pompe (13) reçoit cette solution d'un absorbeur (23) et envoie une partie de ladite solution vers un moteur (18) à travers un échangeur eau-eau (14) et une autre partie vers un échangeur eau-fumées (20). La partie de la solution riche qui passe par l'échangeur eau-eau (14), où elle commence à se réchauffer d'environ 40° C à environ 85° C, passe ensuite par le moteur (18) du véhicule où elle continue de se réchauffer et passe d'environ 85° C à environ 100° C. Le fluide arrive à une vanne de régulation température-pression (17) qui sert non seulement à réguler la température et la pression (elle doit maintenir la température du fluide entre environ 80° C et environ 105° C et la pression entre environ 0,98 bar et environ 1,5 bar, évitant ainsi l'ébullition à l'intérieur du moteur) mais aussi fait office de vanne d'expansion et pulvérise la solution (qui passe d'une pression d'environ 0,98 bar à environ 175 mbar) dans un générateur à haute pression (19).

Ce générateur à haute pression (19) reçoit donc la solution pulvérisée et la surchauffe grâce à la chaleur (jusqu'à environ 400° C) des fumées d'échappement du moteur (18), et porte la solution à environ 130° C, évaporant une partie de l'eau de la solution et envoyant la vapeur à environ 130° C chauffer un générateur à basse pression (4), la partie restée liquide (fluide pauvre) retourne vers l'absorbeur (23) à travers l'échangeur eau-eau (14) après s'être mélangée au fluide pauvre venant du générateur à basse pression (4).

Le fluide riche qui part de la pompe (13) se dirige vers l'échangeur eau-fumées (20). Ce fluide riche se réchauffe dans ledit échangeur eau-fumées (20) et passe d'environ 40° C à environ 60° C et se dirige ensuite vers un échangeur eau-eau (7) où il continue de se réchauffer passant d'environ 60° C à environ 85° C pour finir dans le générateur à basse pression (4) où il continue de se réchauffer à environ 95° C, s'évaporant en partie.

La vapeur se dirige alors vers un condenseur (5) où elle est condensée. La partie restée liquide (solution pauvre) passe par l'échangeur eau-eau (7) où elle commence son refroidissement (d'environ 95° C à environ 70° C) et, après s'être mélangée à la solution pauvre qui vient du générateur à haute pression (19), elle passe par l'échangeur eau-eau (14) où elle se refroidit encore (d'environ 70° C à environ 50° C) pour retourner à l'absorbeur (23).

Le condenseur (5) reçoit la vapeur du générateur à basse pression (4) et celle du générateur à haute pression (19). Avant d'arriver au condenseur (5), la vapeur venant du générateur à haute pression (19) aura préalablement chauffé le générateur à basse pression (4). Le condenseur (5) transforme les 2 sources de vapeur en liquide (eau pure). Du condenseur (5), où règne une pression d'environ 80 mbar, l'eau pure se dirige vers une vanne de lamination (ou expansion) (10) qui la vaporise dans un évaporateur (24) où nous avons une pression d'environ 8 mbar et une température d'environ 6° C.

L'évaporateur (24) est en réalité un échangeur eau vaporisée-eau équipé d'un circulateur d'eau (12) dont le rôle est de refroidir le liquide qui vient d'un échangeur air-eau (6), situé dans l'habitacle du véhicule, dont le liquide sera mû par un circulateur d'eau (2).

L'absorbeur (23) reçoit l'eau pure vaporisée qui vient de l'évaporateur (24) ainsi que la solution pauvre en eau qui vient du générateur à haute pression (19) et du générateur à basse pression (4). Le bromure de lithium de la solution pauvre absorbe l'eau pure vaporisée et le cycle recommence.

L'absorbeur (23) et le condenseur (5) sont refroidis par un liquide qui vient d'un échangeur air-eau (1) dont le liquide circule grâce à un circulateur d'eau (11).

Il est également à noter que le système dispose d'une réserve d'eau froide (3) située entre l'échangeur eau-air ventilé (6) et l'évaporateur (24) permettant de refroidir dès le démarrage du véhicule.

L'échangeur eau-air ventilé (6) climatise l'habitacle de façon traditionnelle tandis que, selon l'invention, l'échangeur eau-air ventilé (1) refroidit le compartiment moteur du véhicule à environ 50° C - 60° C évitant soit l'air trop froid (contre productif pour le moteur) soit l'air trop chaud du radiateur et du moteur (contre productif pour l'appareillage électronique entre autre).

Une électrovanne (9) régule la température à l'intérieur de l'habitacle.

Un échangeur eau-fumées (21), situé en aval de l'échangeur eau-fumées (20), sert à dépolluer les gaz d'échappement du moteur (18) en refroidissant lesdits gaz d'échappement et en condensant ses résidus d'hydrocarbure ainsi qu'en piégeant les particules desdits gaz d'échappement.

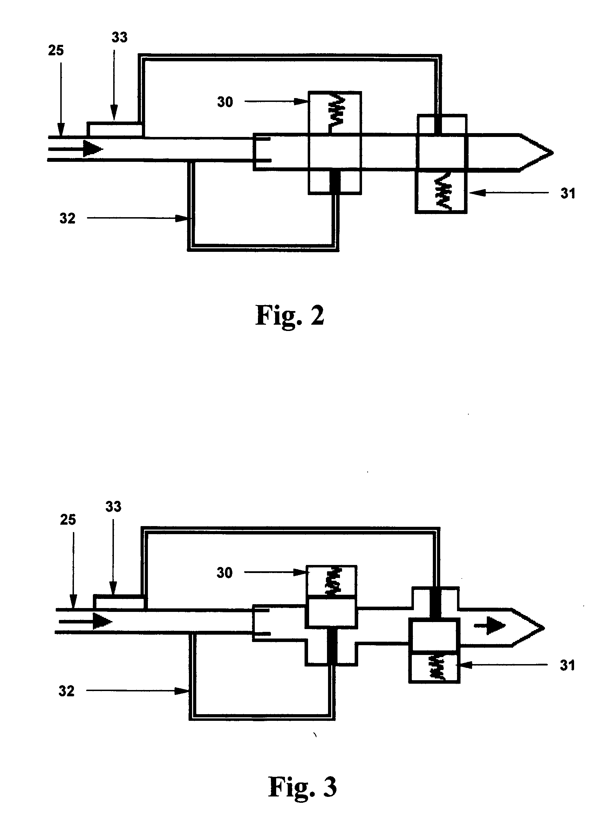

La vanne (17) (Fig. 2 et Fig. 3) est composée d'un corps de vanne (30) qui mesure la pression à travers un tube (32) raccordé au tube principal et d'un corps de vanne thermostatique (31) qui réagit aux variations de température grâce à un bulbe (33).

A 1 atm le corps de vanne pression (30) est complètement fermé permettant à la pression d'augmenter. Il commence à s'ouvrir (voir Fig. 3) lorsque la pression est d'environ 1,1 atm et, lorsque la pression atteint la pression maximum d'environ 1,5 atm, le corps de vanne pression (30) est complètement ouvert.

Le corps de vanne thermostatique (31) commence à s'ouvrir à environ 95° C (Fig. 3) et se trouve complètement ouvert à environ 105° C. Par cette double ouverture de la vanne (31), on contrôle parfaitement la pression et la température (environ 1 atm, environ 95° C) à l'intérieur d'un bloc moteur (22).

Il est à noter qu'à une pression de 80 mbar l'eau bout à environ 40°. La vanne de régulation température-pression (17) permet par conséquent de maintenir une pression/température constante dans la partie du circuit de refroidissement comprise entre le bloc moteur (22) et le moteur (18), évitant ainsi l'évaporation de l'eau à l'intérieur de ladite partie du circuit de refroidissement et permettant de maintenir le refroidissement du compartiment moteur du véhicule à moteur.

## Revendications

1. Dispositif de refroidissement et de dépollution d'un véhicule à moteur destiné au conditionnement de l'habitacle dudit véhicule ainsi qu'au refroidissement de son bloc moteur (22) et dont les éléments sont reliés par un tube principal (25) contenant un fluide hors-gel, comprenant une pompe (13), un absorbeur (23), un générateur à haute pression (19), un générateur à basse pression (4), un condenseur (5), un évaporateur (24) **caractérisé en ce qu'**il comprend une vanne de régulation température-pression (17), située en aval du bloc moteur (22), permettant de maintenir une pression/température constante dans la partie du circuit de refroidissement entourant un moteur (18) à l'intérieur dudit bloc moteur (22), évitant ainsi l'évaporation de l'eau à l'intérieur de ladite partie du circuit de refroidissement et permettant de maintenir le refroidissement dudit bloc moteur (22).

2. Dispositif de refroidissement et de dépollution d'un véhicule à moteur selon la revendication 1, **caractérisé en ce que** la vanne de régulation température-pression (17) comporte un corps de vanne pression (30) qui s'ouvre dès lors que la pression aval augmente.

3. Dispositif de refroidissement et de dépollution d'un véhicule à moteur selon la revendication 2, **caractérisé en ce que** le corps de vanne pression (30) de la vanne de régulation température-pression (17) se ferme dès lors que la pression aval diminue.

4. Dispositif de refroidissement et de dépollution d'un véhicule à moteur selon une des revendications précédentes, **caractérisé en ce que** la vanne de régulation température-pression (17) comporte un corps de vanne thermostatique (31) qui s'ouvre dès lors que la température aval augmente.

5. Dispositif de refroidissement et de dépollution d'un véhicule à moteur selon la revendication 4, **caractérisé en ce que** le corps de vanne thermostatique (31) de la vanne de régulation température-pression (17) se ferme dès lors que la température amont diminue.

6. Dispositif de refroidissement et de dépollution d'un véhicule à moteur selon l'une des revendications précédentes, **caractérisé en ce qu'**il comprend un échangeur eau-air ventilé (6), destiné à la climatisation d'un habitacle de véhicule à moteur et situé à l'intérieur dudit habitacle.

7. Dispositif de refroidissement et de dépollution d'un véhicule à moteur selon l'une des revendications précédentes, **caractérisé en ce qu'**il comprend un échangeur eau-air ventilé (1), permettant le refroidissement d'un compartiment moteur de véhicule à moteur, étant situé à l'intérieur dudit compartiment moteur.

8. Dispositif de refroidissement et de dépollution d'un véhicule à moteur selon la revendication 6 ou 7, **caractérisé en ce qu'**il comprend au moins une réserve d'eau froide (3) permettant de refroidir dès le démarrage du véhicule à moteur et située entre l'échangeur eau-air ventilé (6) et l'évaporateur (24).

9. Dispositif de refroidissement et de dépollution d'un véhicule à moteur selon la revendication 6, **caractérisé en ce qu'**il comprend une électrovanne (9) pour réguler la température à l'intérieur de l'habitacle du véhicule à moteur et située en aval de l'échangeur eau-air ventilé (6).

10. Dispositif de refroidissement et de dépollution d'un véhicule à moteur selon la revendication 1, **caractérisé en ce qu'**il comprend un échangeur eau-fumées (21), situé en aval d'un échangeur eau-fumées (20), servant à dépolluer les gaz d'échappement du moteur (18) en refroidissant lesdits gaz d'échappement et en condensant ses résidus d'hydrocarbure ainsi qu'en piégeant les particules desdits gaz d'échappement.

11. Dispositif de refroidissement et de dépollution d'un véhicule à moteur selon la revendication 1, **caractérisé en ce que** le fluide frigorigène est une solution de bromure de lithium-eau.
